# EUROPEAN PATENT SPECIFICATION

(11) **EP 2 662 196 B1**
(45) Date of publication and mention of the grant of the patent: **16.09.2015**
(21) Application number: 13166696.8
(22) Date of filing: 06.05.2013
(51) Int. Cl.: B29C 47/00, B29C 47/10, B29C 47/36, B29C 47/40, B29C 47/60, B29C 47/76

(54) **Apparatus for the treatment of powder material**
Vorrichtung zur Behandlung von Pulvermaterial
Appareil pour le traitement de matériau en poudre

(30) Priority: 07.05.2012 IT TO20120403
(43) Date of publication of application: 13.11.2013
(73) Proprietor: F.LLI Maris S.P.A., 10090 Rosta (Torino) (IT)
(72) Inventor: Maris, Gianfranco, I-10098 Rivoli (Torino) (IT)
(74) Representative: Gerbino, Angelo

(56) References cited:
- EP-A1- 0 120 447
- EP-A1- 0 508 422
- DE-U1-202007 011 767
- JP-A- H09 262 830
- JP-A- 2003 071 831
- JP-A- 2010 253 804
- US-A- 3 346 919

## Description

The present invention relates to an apparatus for the treatment of powder material, such as an extruder or a direct or indirect feeder of an extruder suitable for working mixtures comprising up to 85% filler in powder form.

In greater detail, such an apparatus comprises a tubular case having a longitudinal axis and an internal cavity inside which at least one conveying screw is arranged parallel to said axis, said case having at least one mouth for feeding into the cavity material and, downstream of said mouth, an opening closed by a first wall permeable to gases and connected by a conduit to a suction pump.

Owing to the vacuum created by the pump inside the cavity of the case the powder material is degassed and compacted such that it may be worked more efficiently and with greater throughputs for the same dimensions of the apparatus. In fact, the powder material - which per se has a fairly low density which may be as little as 0.12 kg/dm³ - tends to incorporate air during the operations of transportation, metering and conveying inside the extruder, such that - if suitable counter-measures are not taken - its density would drop still further, thus increasing its volatility and making handling thereof extremely difficult.

With use, moreover, the permeable wall becomes clogged such that it must be periodically removed and cleaned. Since this removal operation is time-consuming and complex, the idea has occurred to pressurize cyclically the internal cavity so as to reverse the gas flow through the wall and free it from obstructions. This measure has proved to be useful, but is not an entirely satisfactory solution since it is necessary in any case - albeit at longer time intervals - to remove the wall and perform more thorough cleaning thereof.

US-2010/0202243 describes precisely an apparatus of this kind in which the permeable wall forms part of a removable insert so as to facilitate removal thereof. In any case, this operation, although speeded up, nevertheless involves machine downtimes, with consequent production losses.

DE 2007 011767 U1 discloses a two-screw extruder having a cylinder with an opening closed by a wall permeable to gases, which faces the two screws.

On the other hand, JP 2003 071 831 A discloses a two-screw extruder having a cylinder with an opening closed by a wall permeable to gases, which faces just one of the two screws.

JP H09 262830 A discloses an extruder having the features disclosed in the preamble of claim 1 which follows.

The object of the present invention is therefore to provide an apparatus without the abovementioned drawbacks.

According to the invention this object is achieved by means of an apparatus having all the features of claim 1 which follows.

An essential advantage offered by the present invention in respect of US-2010/0202243 is therefore the gain in terms of productivity ensured by the possibility of being able to replace a first gas-permeable wall which has become clogged with a second clean wall, without the resultant need to stop treatment of the powder material inside the apparatus. Advantageously, this replacement is performed automatically as soon as clogging of the porous wall greater than a predetermined threshold value is detected.

In principle, there are two main ways of designing the apparatus according to the invention which will be described in detail in the remainder of the description: the first way envisages that the walls form part of a same tape provided with sliding means, while the second way envisages that the walls form part of respective units which are mounted side-by-side and are slidable along a direction perpendicular to the axis of the case.

Another useful advantage of the apparatus according to the invention - which may be a feeder of an extruder or the extruder itself - is that of being able to use for manufacture of the porous walls conventional materials which are commonly available on the market, for example non-woven fabric filters.

Further advantages and characteristic features of the present invention will become clear from the detailed description given below with reference to the accompanying drawings provided by way of a non-limiting example in which:
Figure 1 is a side elevation and cross-sectional view of an apparatus (feeder) according to the invention;
Figure 2 is a cross-sectional view along the line II-II of Figure 1;
Figure 3 is an exploded perspective view of components of the apparatus according to the preceding figures;
Figure 4 is a side elevation and cross-sectional view of a further apparatus (extruder) according to the invention;
Figure 5 is a cross-sectional view along the line V-V of Figure 4;
Figure 6 is a side elevation and cross-sectional view of yet another apparatus (feeder) according to the invention;
Figure 7 is a cross-sectional view along the line VII-VII of Figure 6;
Figure 8 is a cross-sectional view along the line VIII-VIII of Figure 7;
Figure 9 is a side elevation and cross-sectional view of yet another apparatus (feeder) according to the invention;
Figure 10 is a cross-sectional view along the line X-X of Figure 9; and
Figure 11 is a cross-sectional view along the line XI-XI of Figure 9.

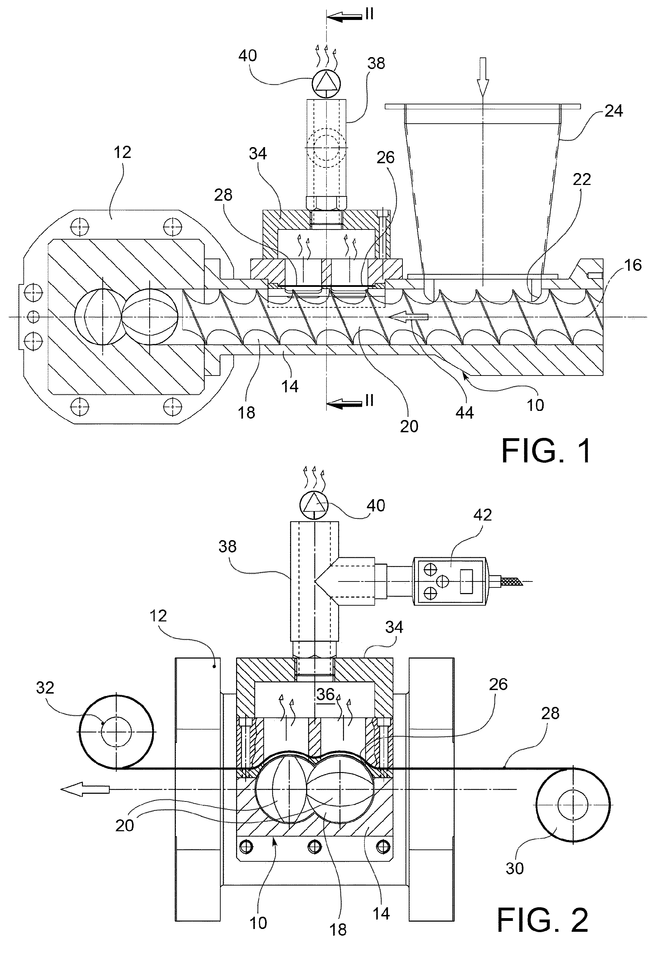

A side feeder 10 of an extruder 12 comprises (Figures 1-3) a tubular case 14 having a longitudinal axis 16 and an internal cavity 18 inside which two conveying screws 20 are mounted parallel to the axis 16.

The case 14 has an opening 22 connected to a loading hopper 24 for feeding into the cavity 18 powder material and, downstream of the mouth 22, an opening 26 closed by a wall permeable to gases, but not to the solid particles of powder, for example a non-woven fabric mesh. The opening 26 faces both the screws 20 and lies in a general plane substantially parallel to that defined by the axes of the two screws 20. The wall permeable to gases forms a section of an open-ended tape 28 provided with movement means suitable for causing sliding thereof, while in any case keeping the opening 26 closed, said wall lying in the same plane as that of said opening. These movement means comprise a first reel 30 for unwinding the tape 28 and a second reel 32 for winding up the tape 28, which have axes substantially parallel to the axis 16 of the case 14 and are arranged on opposite sides of said case.

The tape section 28 which closes off the opening 26 has, mounted above it, a hollow element 34 which has, formed inside it, a chamber 36 which is isolated from the external environment and is connected by a conduit 38 to a suction pump 40. A pressure measuring instrument 42 is arranged along the conduit 38 which is therefore also connected to the section of tape 28 which closes off the opening 26.

During operation, the powder material is loaded by means of the hopper 24 into the cavity 18 of the feeder 10 inside which the screws 20 push it continuously towards the extruder 12 (cf. the arrow 44 in Figure 1). At the same time, the pump 40 positioned along the conduit 38 sucks in air from the cavity 18 such that the porous material passing inside it is compacted and may be moved with high throughput speeds.

The continuous air flow which conveys solid particles through the section of tape 28 which closes the opening 26 tends however to cause gradual clogging of the latter. In order to overcome this problem, the tape 28 is gradually unwound from the reel 30 and wound up by the reel 32 in such a way that the opening 26 is initially closed by a first section of tape 28, followed by a second section, and so on, owing to sliding of the latter. This sliding action may take place continuously or at separate time intervals and is controlled depending on the signals received by the pressure detection instrument 42. In any case the result which is achieved is that of replacing the porous wall of the opening 26 before clogging thereof exceeds a predetermined level, keeping the internal cavity 18 separated from the external environment and therefore without the need to interrupt operation of the apparatus. The fact that the opening 26 and the section of tape 28 closing it at any one time are facing the two screws 20 and parallel to the plane defined by the axes of the latter allows optimization of the air flow and therefore the compacting action exerted by it on the powder material.

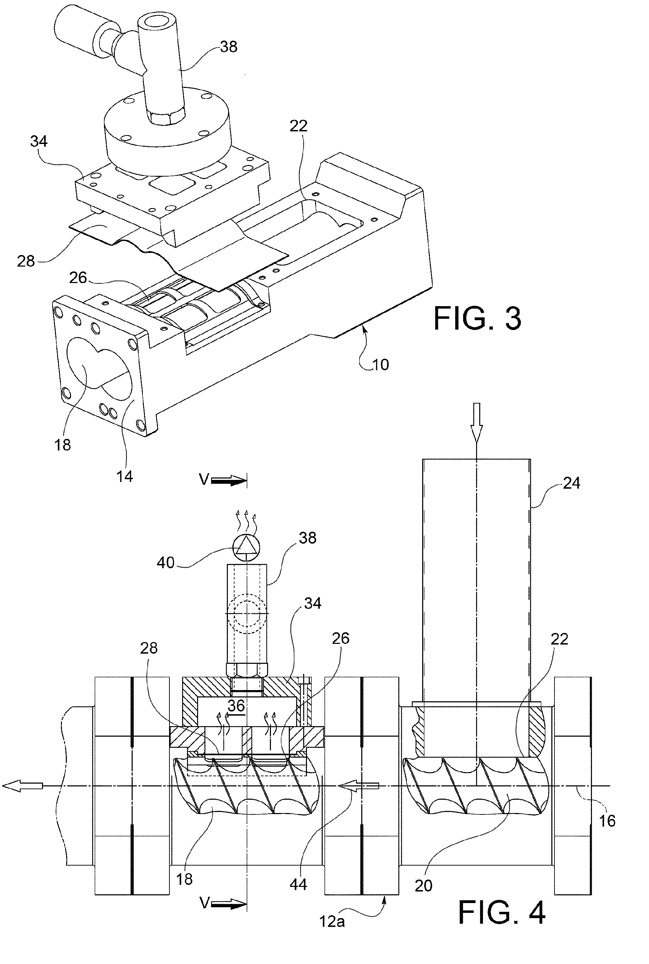

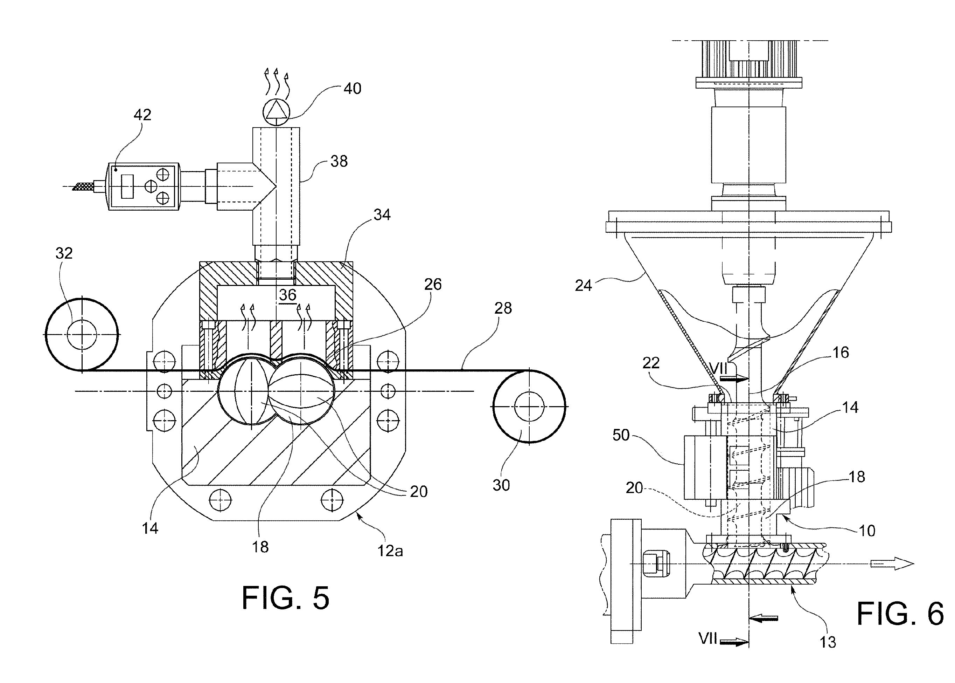

Figures 4 and 5 show an alternative embodiment of the apparatus according to the invention in which numbers identical to those used in the preceding figures identify identical or equivalent parts.

The sole difference compared to the previous example is that the apparatus with an opening 26 closed by a slidable porous tape 28 is directly a co-rotating twin-screw extruder 12a instead of a feeder of a twin-screw extruder. The operating modes are entirely similar to those described above and therefore are not described further.

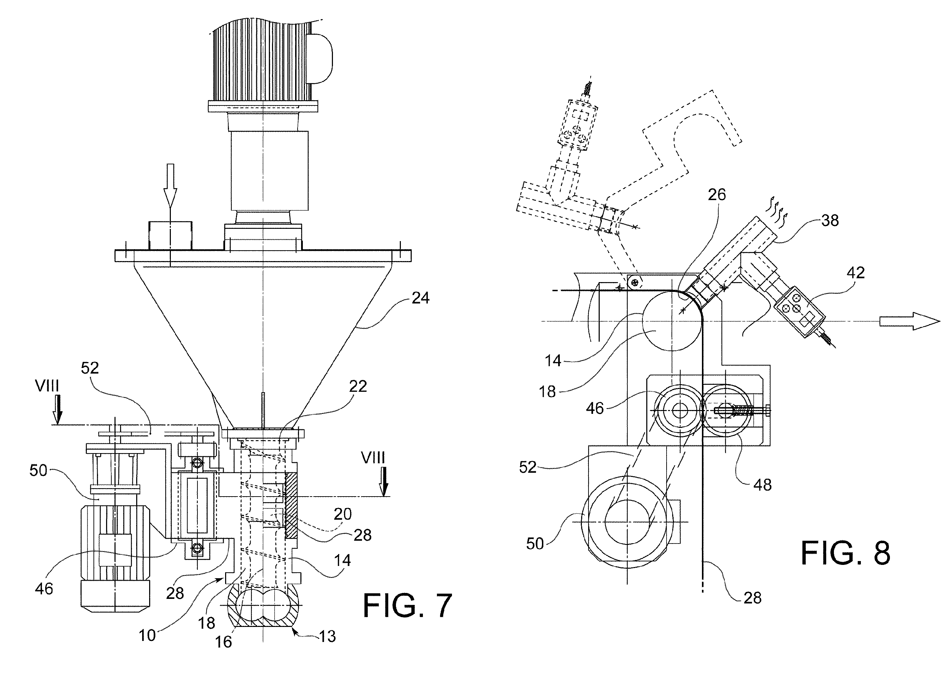

Figures 6 to 8 show a further embodiment of the apparatus according to the invention in which numbers identical to those used in the preceding figures identify identical or equivalent parts.

The apparatus shown in these figures is a side feeder 10 of a twin-screw extruder or of a side feeder of a twin-screw extruder denoted generically by the reference number 13. The feeder 10 has a case 14 with an opening 26 closed by a wall which is permeable to gases, but not to solid particles, and which forms a section of a tape 28. The feeder 10 has in its initial section a mouth connected to a hopper 24 for loading the powder material. In this case, the means for moving the tape 28 comprise a pair formed by a first roll and second roll 46, 48 having axes substantially parallel to the axis 16 of the case 14. The first roll 46 is provided with rotational driving means comprising a gearmotor 50 connected by a flexible member 52, such as a belt or a chain, to the first roll 46. The second roll 48 is idle and faces the first roll 46 in such a way that the rolls 46, 48 define between them a gap - advantageously of adjustable width - through which the tape 28 passes and is thus driven forwards by rotation of the rolls 46, 48. In any case, the operating principle is entirely similar to that of the apparatus described above, namely that the porous wall closing the opening 26 is replaced before becoming clogged, such that the sucking action is always efficient, without the need to interrupt operation of the apparatus in order to perform replacement.

The embodiment of the apparatus described with reference to Figures 6 to 8 could be realized directly on an extruder instead of on a direct or indirect feeder of the extruder, in a similar manner to that shown in Figures 4 and 5.

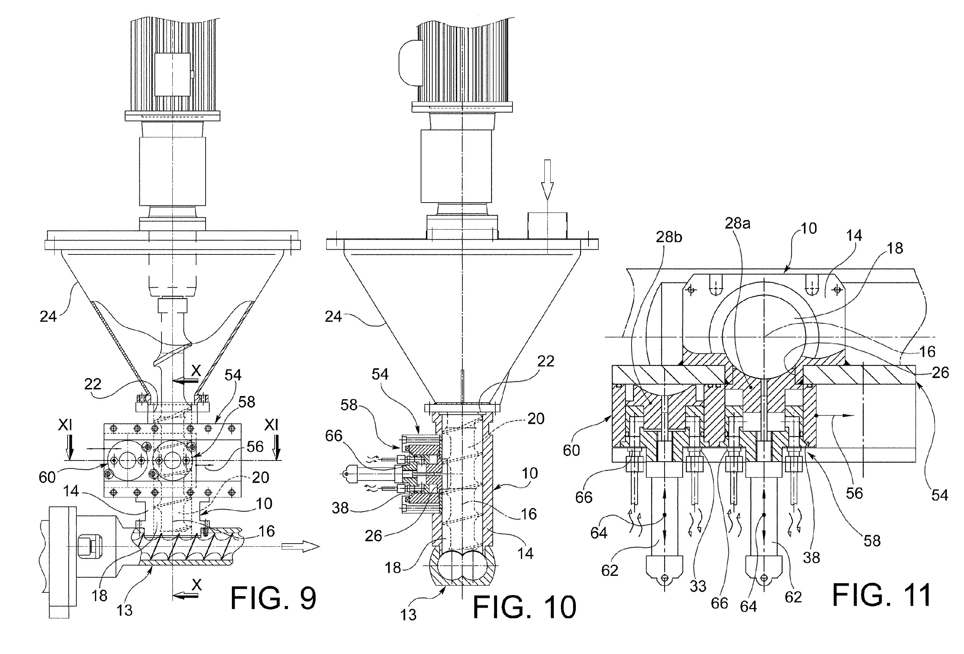

Figures 9 to 11 show yet another embodiment of the apparatus according to the invention in which numbers identical to those used in the preceding figures identify identical or equivalent parts.

The apparatus shown in these figures is a side feeder 10 of a twin-screw extruder or of a side feeder of a twin-screw extruder denoted generically by the reference number 13. The feeder 10 has a case 14 with an opening 26, to the outside of which a support structure 54 is fixed, said support structure having, mounted thereon, side-by-side and slidable along a direction 56 perpendicular to the axis 16 of the case 14, first and second units 58, 60.

The first unit 58 comprises a first wall 28a, movement means (consisting of a cylinder/piston unit 62) for moving the first wall 28a along a direction 64 perpendicular both to the axis 16 of the case 14 and to the direction 56 of sliding of the units 58, 50, a conduit 38 for connection to a suction pump, as well as a further conduit 66 for supplying compressed air. The second unit 60 has an identical structure and therefore includes a second wall which is identified by the reference number 28b.

During the initial phase of operation of the apparatus, the second unit 60 is inactive, while the first unit 58 is arranged opposite the opening 26 so as to close it with its first porous wall 28a. Inside the conduit 38 of the first unit 58 a suction flow is generated in such a way that the powder material which passes into the cavity 14 is compacted following a drop in the pressure. When the first wall 28a tends to become clogged, a pressurized air flow is sent for a short period of time through the conduit 66 in order to remedy this situation. With time, however, even this measure is no longer able to prevent clogging. Therefore, by means of the cylinder/piston unit 60, the first wall 28a is disengaged from the opening 26 and the first unit 58 is slid on the support structure 54 along the direction indicated by the arrow 56 so that it is possible to arrange the second unit 60 in the position originally occupied by it. The second unit, therefore, may replace the first unit for all intents and purposes once, by means of the respective cylinder/piston unit 60, the second wall 28a has been arranged so as to close the opening 26. In the time period during which the second unit 60 is in operation, the wall 28a of the first unit 58 may be thoroughly cleaned such that the first unit 58 may then in turn replace the second unit 60, and so on. In this case also, therefore, it is possible to replace the porous wall 28a, 28b which closes the opening 26 before it becomes clogged, keeping the internal cavity 14 separated from the external environment and therefore without the need to interrupt operation of the apparatus.

The embodiment of the apparatus described with reference to Figures 9 to 11 could be realized directly on an extruder instead of on a direct or indirect feeder of the extruder, in a similar manner to that shown in Figures 4 and 5.

Obviously, without modifying the principle of the invention, the constructional details and embodiments may be greatly varied with respect to that described purely by way of example, without departing from the scope thereof.

## Claims

1. Apparatus for the treatment of powder material, comprising a tubular case (14) having a longitudinal axis (16) and an internal cavity (18) inside which at least two conveying screws (20) are arranged parallel to said axis (16), said case (14) having at least one mouth (22) for feeding into the cavity (18) said material and, downstream of said mouth (22), an opening (26) facing said at least two screws (20), closed by a first wall permeable to gases and connected by a conduit (38) to a suction pump (40), said apparatus further comprising at least one second wall permeable to gases which can replace said first wall while said internal cavity (18) is kept separated from the external environment, in such way that it is not necessary to interrupt operation of the apparatus in order to perform replacement, said apparatus being **characterized in that** said first and second walls form part of a same tape (28) provided with movement means suitable for causing sliding thereof while keeping the opening (26) closed.

2. Apparatus according to Claim 1, wherein said tape (28) is open-ended and said movement means comprise a first reel (30) for unwinding the tape (28) and a second reel (32) for winding up the tape (28), said reels (28, 30) having axes substantially parallel to the axis (16) of the case (14).

3. Apparatus according to Claim 1, wherein said tape (28) is open-ended and said movement means comprise a pair of rolls (46, 48) having axes substantially parallel to the axis (16) of the case (14), wherein the first roll (46) is provided with rotational driving means and the second roll (48) is idle and faces the first roll (46), the two rolls (46, 48) defining between them a gap through which said tape (28) passes, thus being moved.

4. Apparatus according to Claim 3, wherein said rotational driving means comprise a gearmotor (50) connected by a flexible member (52), such as a belt or a chain, to the first roll (46).

5. Apparatus according to Claim 1, wherein said opening (26) lies in a general plane substantially parallel to that defined by the axes of said at least two screws (20).

6. Apparatus according to any one of the preceding claims, wherein said apparatus is an extruder (12a), in particular a co-rotating twin-screw extruder.

7. Apparatus according to any one of the preceding Claims 1 to 6, wherein said apparatus is a side feeder (10) of an extruder or of a side feeder of an extruder.

## Patentansprüche

1. Vorrichtung für die Verarbeitung von Pulvermaterial, mit:
einem rohrförmigen Gehäuse (14), das eine Längsachse (16) und eine innere Aussparung (18) hat, innerhalb welcher mindestens zwei Förderschnecken (20) parallel zu der Achse (16) angeordnet sind, das Gehäuse (14) mindestens eine Öffnung (22) für das Zuführen des Materials in die Aussparung (18) hinein und, stromabwärts der Öffnung (22), eine den mindestens zwei Schnecken (20) gegenüberliegende Öffnung (26) hat, die durch eine erste für Gase durchlässige Wand verschlossen und durch eine Leitung (38) mit einer Saugpumpe (40) verbunden ist, wobei die Vorrichtung ferner:
mindestens eine zweite für Gase durchlässige Wand hat, welche die erste Wand ersetzen kann, während die innere Aussparung (18) von der äußeren Umgebung getrennt gehalten wird, in solch einer Weise, dass es nicht notwendig ist, den Betrieb der Vorrichtung zu unterbrechen, um den Austausch durchzuführen, wobei
die Vorrichtung **dadurch gekennzeichnet ist, dass** die erste und zweite Wand einen Teil eines gemeinsamen Bandes (28) ausbilden, das mit einer Bewegungseinrichtung versehen ist, die für ein Bewirken eines Davongleitens geeignet ist, während die Öffnung (26) geschlossen bleibt.

2. Vorrichtung nach Anspruch 1, wobei
das Band (28) offene Enden hat und die Bewegungseinrichtung eine erste Spule (30) zum Abwickeln des Bandes (28) und eine zweite Spule (32) zum Aufwickeln des Bandes (28) aufweist, wobei die Spulen (28, 30) zu der Achse (16) des Gehäuses (14) im Wesentlichen parallele Achsen haben.

3. Vorrichtung nach Anspruch 1, wobei
das Band (28) offene Enden hat und die Bewegungseinrichtung ein Walzenpaar (46, 48) aufweist, das zu der Achse (16) des Gehäuses (14) im Wesentlichen parallele Achsen hat, wobei die erste Walze (46) mit einer Drehantriebseinrichtung versehen und die zweite Walze (48) leerdrehend ist und der ersten Walze (46) gegenüberliegt, wobei die zwei Walzen (46, 48) einen Spalt zwischen sich begrenzen, durch den das Band (28) verläuft, und somit bewegt wird.

4. Vorrichtung nach Anspruch 3, wobei
die Drehantriebseinrichtung einen durch ein flexibles Bauteil (52), wie einen Riemen oder eine Kette, mit der ersten Walze (46) verbundenen Getriebemotor (50) aufweist.

5. Vorrichtung nach Anspruch 1, wobei
die Öffnung (26) in einer allgemeinen Ebene liegt, die im Wesentlichen parallel zu der durch die Achsen der mindestens zwei Schnecken (20) bestimmten Ebene ist.

6. Vorrichtung nach einem der vorherigen Ansprüche, wobei
die Vorrichtung ein Extruder (12a), insbesondere ein Gleichlaufdoppelschneckenextruder ist.

7. Vorrichtung nach einem der vorherigen Ansprüche 1 bis 6, wobei
die Vorrichtung eine Seitenzuführvorrichtung (10) eines Extruders oder einer Seitenzuführvorrichtung eines Extruders ist.

## Revendications

1. Appareil pour le traitement d'un matériau en poudre, comprenant un carter tubulaire (14) ayant un axe longitudinal (16) et une cavité interne (18) à l'intérieur de laquelle au moins deux vis de transport (20) sont agencées parallèlement audit axe (16), ledit carter (14) ayant au moins une bouche (22) destiné à introduire ledit matériau dans la cavité (18) et, en aval de ladite bouche (22), une ouverture (26) faisant face auxdites au moins deux vis (20), fermée par une première paroi perméable aux gaz et reliée par un conduit (38) à une pompe d'aspiration (40), ledit appareil comprenant en outre au moins une seconde paroi perméable aux gaz qui peut remplacer ladite première paroi pendant que ladite cavité interne (18) est maintenue séparée du milieu extérieur, de telle sorte qu'il n'est pas nécessaire d'interrompre le fonctionnement de l'appareil afin d'effectuer le remplacement, ledit appareil étant **caractérisé en ce que** lesdites première et seconde parois font partie d'un même ruban (28) pourvu de moyens de déplacement aptes à provoquer son glissement tout en maintenant l'ouverture (26) fermée.

2. Appareil selon la revendication 1, dans lequel ledit ruban (28) est à extrémité ouverte et lesdits moyens de déplacement comprennent une première bobine (30) pour dérouler le ruban (28) et une seconde bobine (32) pour enrouler le ruban (28), lesdites bobines (28, 30) ayant un axe sensiblement parallèle à l'axe (16) du carter (14).

3. Appareil selon la revendication 1, dans lequel ledit ruban (28) est à extrémité ouverte et lesdits moyens de déplacement comprennent une paire de rouleaux (46, 48) ayant un axe sensiblement parallèle à l'axe (16) du carter (14), dans lequel le premier rouleau (46) est pourvu de moyens d'entraînement rotatifs et le second rouleau (48) est inactif et fait face au premier rouleau (46), les deux rouleaux (46, 48) définissant entre eux un interstice dans lequel passe ledit ruban (28), étant ainsi déplacé.

4. Appareil selon la revendication 3, dans lequel lesdits moyens d'entraînement rotatifs comprennent un moteur à engrenages (50) relié par un élément souple (52), tel qu'une courroie ou une chaîne, au premier rouleau (46).

5. Appareil selon la revendication 1, dans lequel ladite ouverture (26) se trouve dans un plan général sensiblement parallèle à celui défini par les axes desdites au moins deux vis (20).

6. Appareil selon l'une quelconque des revendications précédentes, dans lequel ledit appareil est une extrudeuse (12a), en particulier une extrudeuse à double vis corotative.

7. Appareil selon l'une quelconque des revendications 1 à 6 précédentes, dans lequel ledit appareil est un module d'alimentation latéral (10) d'une extrudeuse ou d'un module d'alimentation latéral d'une extrudeuse.
